(19) **Europäisches Patentamt / European Patent Office / Office européen des brevets**

(11) **EP 2 865 722 B1**

(12) # EUROPEAN PATENT SPECIFICATION

(45) Date of publication and mention
of the grant of the patent:
**13.03.2019  Bulletin 2019/11**

(21) Application number: **13807307.7**

(22) Date of filing: **20.06.2013**

(51) Int Cl.:
*C08K 7/24* (2006.01)     *C08K 9/02* (2006.01)
*B32B 5/00* (2006.01)     *B32B 7/02* (2019.01)
*B32B 3/26* (2006.01)     *C09K 5/14* (2006.01)
*C09D 183/04* (2006.01)   *F02B 77/11* (2006.01)
*C04B 111/00* (2006.01)   *C09D 183/16* (2006.01)
*C09D 7/40* (2018.01)     *C04B 35/16* (2006.01)
*C04B 35/486* (2006.01)   *C04B 35/495* (2006.01)
*C04B 35/63* (2006.01)    *C04B 38/06* (2006.01)
*C04B 38/08* (2006.01)    *C23C 18/12* (2006.01)
*C09D 7/61* (2018.01)     *C08K 7/08* (2006.01)
*C08K 3/22* (2006.01)     *C01B 33/113* (2006.01)

(86) International application number:
**PCT/JP2013/067006**

(87) International publication number:
**WO 2013/191263 (27.12.2013 Gazette 2013/52)**

(54) **POROUS PLATE-SHAPED FILLER, COATING COMPOSITION, HEAT-INSULATING FILM, AND HEAT-INSULATING FILM STRUCTURE**

PLATTENFÖRMIGER PORÖSER FÜLLSTOFF, BESCHICHTUNGSZUSAMMENSETZUNG, WÄRMEISOLIERENDER FILM SOWIE WÄRMEISOLIERENDE FILMSTRUKTUR

CHARGE POREUSE EN FORME DE PLAQUE, COMPOSITION DE REVÊTEMENT, FILM THERMO-ISOLANT, ET STRUCTURE DE FILM THERMO-ISOLANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2012   JP 2012138784**

(43) Date of publication of application:
**29.04.2015   Bulletin 2015/18**

(73) Proprietor: **NGK Insulators, Ltd.**
**Nagoya-shi, Aichi 467-8530 (JP)**

(72) Inventors:
• **TOMITA, Takahiro**
**Nagoya-shi**
**Aichi 467-8530 (JP)**

• **HASHIMOTO, Shigeharu**
**Yokohama-shi**
**Kanagawa 224-0007 (JP)**
• **NISHIGAKI, Taku**
**Nagoya-shi**
**Aichi 467-8530 (JP)**

(74) Representative: **TBK**
**Bavariaring 4-6**
**80336 München (DE)**

(56) References cited:
**WO-A2-2012/024415    JP-A- H09 295 872**
**JP-A- 2000 044 843    JP-A- 2004 043 291**
**JP-A- 2004 067 500    JP-A- 2005 517 620**
**JP-A- 2006 521 463    JP-A- 2008 506 802**
**JP-A- 2010 500 468    JP-A- 2011 122 074**
**US-A- 5 759 932       US-A1- 2004 219 010**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present invention relates to a heat-insulating film and a heat-insulating film structure for improving a heat insulating effect. The present invention also relates to a porous plate-shaped filler included in a heat-insulating film and a coating composition for forming a heat-insulating film.

## Background Art

There is a need for a heat-insulating film to be formed on a surface so as to improve heat-insulating efficiency and flame resistance. Patent Document 1 discloses a coating film that has a high surface hardness and can prevent damage. The coating film is formed by dispersing hollow particles formed of silica shells in a binder. The wear resistance and the high hardness of the hollow particles formed of the silica shells allow improvement in the wear resistance of a substrate where the coating film is formed. The heat insulating property of the hollow particles formed of the silica shells also allows improvement in the flame resistance.

Patent Document 2 discloses an internal combustion engine that includes a structural member whose heat insulating performance is improved. The internal combustion engine of Patent Document 2 is constituted such that a heat insulating material is arranged adjacent to the inner wall of an exhaust passage and a high-temperature working gas (exhaust gas) flows along the flow passage formed by the heat insulating material. In the heat insulating material, the respective particles of mesoporous silica spherical (MSS) particles with an average particle diameter of 0.1 to 3 $\mu$m are stacked while the particles are densely gathered together via a bonding material. In the MSS particle, countless mesopores with an average pore diameter of 1 to 10 nm are formed.

Patent Document 3 discloses a heat-insulating coating comprising needle-like shapes, which are a by-product of the manufacture of macroscopic hollow spheres. The needle-like shapes have a wall structure density of 70 to 100%, aspect ratios of less than 5-to-1 and lengths between 200 and 5000 $\mu$m.

## Citation list

## Patent Documents

Patent Document 1: JP 2008 200922 A
Patent Document 2: JP 2011 52630 A
Patent Document 3: US 2004/219010 A1

## Summary of the Invention

## Problem to be Solved by the Invention

In Patent Document 1, the hollow particles formed of the silica shells with outer diameters of about 30 to 300 nm are approximately uniformly dispersed in an organic resin binder, an inorganic polymer binder, or an organic-inorganic hybrid binder so as to provide the heat insulating property to the coating film. In Patent Document 2, the mesoporous silica spherical (MSS) particles having the mesopores with the average particle diameter of 0.1 to 3 $\mu$m and the average pore diameter of 1 to 10 nm are stacked while being densely gathered together, so as to ensure the high heat insulating performance.

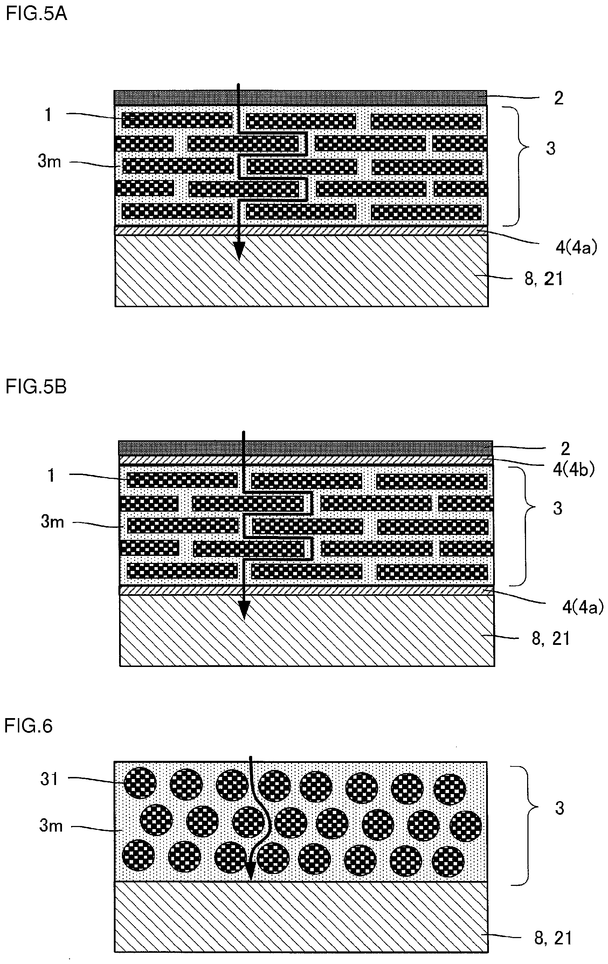

Since the hollow particles and the porous particles used in Patent Documents 1 and 2 have low thermal conductivities, the other matrix portion (the phase binding the particles) is inferred to be a main heat transfer path. Since these particles have cubic shapes or spherical shapes, the path of the heat is comparatively short as illustrated in FIG. 6, and the thermal conductivity is not sufficiently low.

An object of the present invention is to provide a heat-insulating film and a heat-insulating film structure with improved heat insulating effects. Additionally, another object is to provide a porous plate-shaped filler included in the heat-insulating film and a coating composition for forming the heat-insulating film.

## Means for solving the Problem

The inventors found that it was possible to achieve the above-described objects by using a porous plate-shaped filler that had a plate shape with an aspect ratio of 3 or more, a minimum length of 0.1 to 50 μm, and a porosity of 20 to 99% in the heat-insulating film. That is, the present invention provides the following porous plate-shaped filler, coating composition, heat-insulating film, and heat-insulating film structure.

[1] A porous plate-shaped filler according to the present invention has the features set forth in claim 1.
[2] A coating composition according to the present invention has the features set forth in claim 10.
[3] A heat-insulating film according to the present invention has the features set forth in claim 11.
[4] A heat-insulating film structure according to the present invention has the features set forth in claim 13.
[5] Further developments of the present invention are defined in the dependent claims.

**Effect of the Invention**

The porous plate-shaped filler has a plate shape with an aspect ratio of 3 or more, a minimum length of 0.1 to 50 μm and a porosity of 20 to 99%. The heat-insulating film using the porous plate-shaped filler ensures a longer length of the heat transfer path compared with the case where a spherical or cubic filler is used. Thus, the thermal conductivity can be reduced. This ensures a higher heat insulating effect than in conventional techniques even when the heat-insulating film is thin. Additionally, the binding area of the porous plate-shaped fillers via the matrix is wider compared with the case where spherical fillers and the like are used. This allows increasing in the strength.

**Brief Description of the Drawings**

FIG. 1 is a schematic diagram illustrating one embodiment of a porous plate-shaped filler according to the present invention;
FIG. 2 is a schematic diagram illustrating another embodiment of the porous plate-shaped filler;
FIG. 3 is a schematic diagram illustrating one embodiment of a heat-insulating film and a heat-insulating film structure according to the present invention;
FIG. 4 is a schematic diagram illustrating one embodiment of an engine;
FIG. 5A is a schematic diagram illustrating another embodiment of the heat-insulating film and the heat-insulating film structure according to the present invention;
FIG. 5B is a schematic diagram illustrating yet another embodiment of the heat-insulating film and the heat-insulating film structure according to the present invention; and
FIG. 6 is a schematic diagram illustrating the heat-insulating film and the heat-insulating film structure according to the Comparative Example.

**Mode for Carrying out the Invention**

Hereinafter, embodiments of the present invention will be described with reference to the drawings.

1. Porous Plate-Shaped Filler

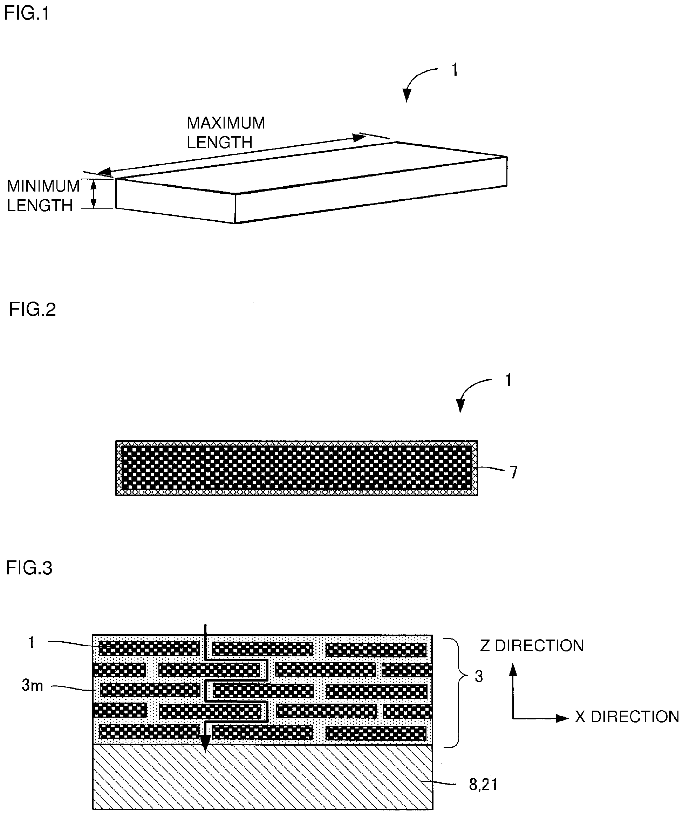

FIG. 1 illustrates one embodiment of a porous plate-shaped filler 1 according to the present invention. The porous plate-shaped filler 1 of the present invention has a plate shape where an aspect ratio is 3 or more, a minimum length of 0.1 to 50 μm, and a porosity of 20 to 99%. In this description, the porosity is obtained by the following formula.

$$\text{Porosity (\%)} = (1 - (\text{Apparent Particle Density} \div \text{True Density})) \times 100$$

In the above-described formula, the apparent particle density is measured with a liquid immersion method using mercury. The true density is measured with a pycnometer method after the porous plate-shaped filler is sufficiently pulverized.

In this description, the aspect ratio is defined by the maximum length/the minimum length of the porous plate-shaped filler 1. Here, the maximum length is the maximum length of the particle (the porous plate-shaped filler 1) when the particle is sandwiched by a pair of parallel surfaces. The minimum length is similarly the minimum length of the particle when the particle is sandwiched by a pair of parallel surfaces, and corresponds to what is called the thickness in the case of a flat plate shape. The plate shape of the porous plate-shaped filler 1 of the present invention includes not only a flat plate shape (plate that is flat and not curved) but also a curved plate shape or a plate shape with a non-constant thickness (minimum length) insofar as the aspect ratio is 3 or more and the minimum length is 0.1 to 50 $\mu$m. The plate shape may be a fiber-like, needle-like, or block-like shape and the like. Among these shapes, the porous plate-shaped filler 1 of the present invention is preferred to have a flat plate shape. Additionally, the surface shape of the plate may be any shape of a square shape, a quadrangular shape, a triangular shape, a hexagonal shape, a circular shape, and the like.

This porous plate-shaped filler 1 included in a heat-insulating film 3 as described later allows improving the heat insulating effect.

The porous plate-shaped filler 1 is preferred to include nano-order pores, nano-order particles, or crystal grains. Here, the nano order is 1 nm or more and less than 1000 nm. Using the pores, particles, or crystal grains in this range allow improving the heat insulating effect.

The porous plate-shaped filler 1 of the present invention is preferred to have pores with a pore diameter of 10 to 500 nm. One filler may have one pore (hollow particle) or a large number of pores (porous particle). The hollow particle is a particle where one closed pore is present inside of the particle. The porous particle is a particle where the inside of the particle is porous, that is, a particle that includes pores other than the hollow particle. The porous plate-shaped filler 1 of the present invention includes not only the porous particle but also the hollow particle. That is, the number of pores included in the porous plate-shaped filler 1 may be one or a large number, and the pores may be open pores or closed pores. When the porous plate-shaped filler 1 with these pores is included in the heat-insulating film 3, the pores allow improving the heat insulating effect.

As the material of the porous plate-shaped filler 1, for example, there are a hollow glass bead, a hollow ceramic bead, a fly ash balloon, a hollow silica, and the like. There are also mesoporous silica, mesoporous titania, mesoporous zirconia, silas balloon, and the like. Alternatively, there is also a porous plate-shaped filler to be obtained by a manufacturing method described later.

The minimum length of the porous plate-shaped filler 1 is 0.1 to 50 $\mu$m, and is preferred to be 10 $\mu$m or less. When the minimum length of the porous plate-shaped filler 1 is short, the heat-insulating film 3 can be thin. That is, the heat insulating effect can be improved even when the heat-insulating film 3 is thin.

The porous plate-shaped filler 1 of the present invention is preferred to have a thermal conductivity of 1 W/ (m•K) or less. The thermal conductivity is more preferred to be 0.5 W/ (m•K) or less, and is further preferred to be 0.3 W/ (m•K) or less. When the porous plate-shaped filler 1 with this thermal conductivity is included in the heat-insulating film 3, the heat insulating effect can be improved.

The porous plate-shaped filler 1 is preferred to have a heat capacity of 10 to 3000 kJ/(m$^3$•K). The heat capacity is more preferred to be 10 to 2500 kJ/(m$^3$•K), and is further preferred to be 10 to 2000 kJ/(m$^3$•K). When the porous plate-shaped filler 1 with the heat capacity in this range is included in the heat-insulating film 3, the heat insulating effect can be improved.

The porous plate-shaped filler 1 is preferably configured to include particles with a particle diameter of 1 nm to 10 $\mu$m. The particle may be a particle formed of one crystal grain (single crystal particle), or may be a particle formed of multiple crystal grains (polycrystalline particle). That is, the porous plate-shaped filler 1 is preferred to be a group of particles with particle diameters in this range. The particle diameter is obtained by measuring the size of one particle (diameter in the case of a spherical shape, otherwise the largest diameter) among the particle group constituting the frame of the porous plate-shaped filler 1 from an image by electron microscope observation. The particle diameter is preferred to be 1 nm to 5 $\mu$m, and is further preferred to be 1 nm to 1 $\mu$m. When the porous plate-shaped filler 1 with the heat capacity in this range is included in the heat-insulating film 3, the heat insulating effect can be improved.

The porous plate-shaped filler 1 is preferred to include metal oxides, and is further preferred to be formed only of metal oxides alone. This is because the inclusion of the metal oxides is likely to cause a low thermal conductivity due to a strong ion binding property between metal and oxygen compared with the metal non-oxides (such as carbides and nitrides).

In the porous plate-shaped filler 1, the metal oxide is preferred to be an oxide of one element selected from the group consisting of Zr, Y, Al, Si, Ti, Nb, Sr, and La or to be a composite oxide of two or more elements. This is because thermal conduction due to a lattice vibration (phonon) which is the main cause of the thermal conduction is less likely to occur when the metal oxides are the oxides or the composite oxides of these elements.

As illustrated in FIG. 2, the porous plate-shaped filler 1 of the present invention is preferred to have a coating layer 7 with a thickness of 1 nm to 1 $\mu$m on at least a part of the surface of the porous plate-shaped filler 1. Further, the coating layer 7 is preferred to be a thermal resistance film that reduces the heat transfer and/or reflects the radiation heat and/or scatters the lattice vibration (phonon). When a thermal resistance film with several tens nm is formed on the surface of the porous plate-shaped filler 1, the thermal conductivity of the heat-insulating film 3 can be further decreased. Thus, such configuration is preferable. The thermal resistance film should not be of the same material as that of the porous plate-shaped filler to be coated, and the porous plate-shaped filler 1 is preferred to be coated with a different material (such as alumina and zinc oxide) . While there is no problem whether the thermal resistance film is fine or porous, the thermal resistance film is preferred to be fine. The formation of the thermal resistance film on a part of the surface of the porous plate-shaped filler provides the effect that the thermal conductivity is decreased. When all of the surface of the porous plate-shaped filler 1 is covered with the thermal resistance film, the effect that the thermal conductivity is further decreased can be obtained.

Next a method for manufacturing the porous plate-shaped filler 1 of the present invention is described. As the method for manufacturing the porous plate-shaped filler 1, there are press molding, casting, extrusion, injection molding, tape casting, a doctor blade method, and the like. Any method is possible, however the doctor blade method as an example is described in the following.

Firstly, a pore former, a binder, a plasticizer, a solvent, and the like are added to ceramic powders to be mixed together by a ball mill and the like, so as to prepare a slurry for forming a green sheet.

As the ceramic powders there can be used zirconia powders, partially-stabilized zirconia powders (such as yttria partially-stabilized zirconia powders), fully-stabilized zirconia powders (such as yttria fully-stabilized zirconia powders), alumina powders, silica powders, titania powders, oxidized lanthanum powders, yttria powders, rare-earth zirconate powders (such as lanthanum zirconate powders), rare-earth silicate powders (such as yttrium silicate powders), niobate powders (such as strontium niobate powders), mullite powders, spinel powders, zircon particles, magnesia powders, yttria powders, ceria powders, silicon carbide powders, silicon nitride powders, aluminum nitride powders, and the like. Regarding these powders, not only one kind but also the combination of two or more kinds may be used. Additionally, the powders are not limited to dry powders, and may employ powders dispersed in water or an organic solvent in a colloidal state (sol state). As the pore former there can be used latex particles, melamine resin particles, PMMA particles, polyethylene particles, polystyrene particles, carbon black particles, foamable resin, water absorbable resin, and the like. As the binder there can be used polyvinyl butyral resin (PVB), polyvinyl alcohol resin, polyvinyl acetate resin, polyacrylic resin, and the like. As the plasticizer there can be used dibutyl phthalate (DBP), dioctyl phthalate (DOP), and the like. As the solvent there can be used xylene, 1-butanol, and the like.

The above-described slurry for forming the green sheet undergoes a vacuum defoaming treatment to adjust the viscosity to be 100 to 10000 cps. Subsequently, using a doctor blade device, the green sheet is formed such that the thickness after firing is 0.1 to 100 $\mu$m, and is cut into the outer shape of dimensions (0.5 to 200) mm $\times$ (0.5 to 200) mm. The cut formed body is fired at 800 to 2300°C for 0.5 to 20 hours and is crushed as necessary after the firing. Thus, a porous and thin plate filler (the porous plate-shaped filler 1) can be obtained. Here, the green sheet before firing can be processed, for example, cut or punched into a predetermined surface shape (a square shape, a quadrangular shape, a hexagonal shape, or a circular shape) and then fired, so as to obtain the porous and thin plate filler without crushing after firing.

2. Coating Composition

The coating composition of the present invention includes the above-described porous plate-shaped filler 1 and one or more selected from the group consisting of an inorganic binder, an inorganic polymer, an organic-inorganic hybrid material, an oxide sol, and liquid glass. Furthermore, the coating composition may include a compact filler, a viscosity adjuster, a solvent, a dispersing agent, and the like. The heat-insulating film 3 can be formed by application, drying, and/or heat treatment of the coating composition. The specific materials included in the coating composition are cement, bentonite, aluminum phosphate, silica sol, alumina sol, boehmite sol, zirconia sol, titania sol, tetramethyl orthosilicate, tetraethyl orthosilicate, polysilazane, polycarbosilane, polyvinyl silane, polymethylsilane, polysiloxane, polysilsesquioxane, silicone, geopolymer, sodium silicate, and the like. The organic-inorganic hybrid material is preferred to be an acryl-silica hybrid material, an epoxy-silica hybrid material, a phenol-silica hybrid material, a polycarbonate - silica hybrid material, a nylon-silica hybrid material, a nylon-cray hybrid material, an acryl-alumina hybrid material, an acryl-calcium silicate hydrate hybrid material, and the like.

The viscosity of the coating composition is preferably to be 0.1 to 5000 mPa•s, and is further preferably to be 0.5 to 1000 mPa•s. In the case where the viscosity is smaller than 0.1 mPa•s, the coating composition might flow after the application and the thickness of the coated film might be inhomogeneous. In the case where the viscosity is larger than 5000 mPa•s, the coating composition might be non-flowable and less likely to be homogeneously applied.

3. Heat-insulating film

The heat-insulating film 3 will be described using FIG. 3. In the heat-insulating film 3 of the present invention, the above-described porous plate-shaped fillers 1 are dispersedly arranged in a matrix 3m for binding the porous plate-shaped fillers 1 together. The matrix 3m is a component that is present in the peripheral area of the porous plate-shaped filler 1 and between these particles, and is a component for binding these particles together.

The heat-insulating film 3 of the present invention is preferred to have the porous plate-shaped fillers 1 arranged (stacked) in a layered state. Here, the arrangement in the layered state means that the multiple porous plate-shaped fillers 1 are present in the matrix 3m in an oriented state where the direction of the minimum length of the porous plate-shaped filler 1 corresponds to the direction parallel to the thickness direction of the heat-insulating film 3. Here, it is to be noted that the positions (the positions of the center of gravity) of the porous plate-shaped fillers 1 need not be orderly and periodically arranged in the X, Y, and Z directions (here, the Z direction is defined as the thickness direction) of the heat-insulating film 3, and there is no problem if the positions of the porous plate-shaped fillers 1 are present randomly. While there is no problem if the number of stacked fillers is equal to or more than 1, the number of stacked fillers is preferably larger and preferably equal to or more than 5. Stacking the porous plate-shaped fillers 1 in the layered state in the heat-insulating film 3 ensures a long folded heat transfer path so as to improve the heat insulating effect. In particular, as illustrated in FIG. 3, the positions of the porous plate-shaped fillers 1 are preferred not to be orderly arranged in the Z direction (displaced from one another) since the heat transfer path is folded more to be longer.

The heat-insulating film 3 of the present invention is preferred to include at least one of ceramic, glass, and resin as the matrix 3m. From the standpoint of thermal resistance, ceramic or glass is more preferred. More specifically, as the material to be the matrix 3m, there are, for example, silica, alumina, mullite, zirconia, titania, silicon nitride, silicon oxynitride, silicon carbide, silicon oxycarbide, calcium silicate, calcium aluminate, calcium aluminosilicate, aluminum phosphate, potassium aluminosilicate, glass, and the like. From the standpoint of thermal conductivity, these are preferred to be amorphous materials. Alternatively, in the case where the material of the matrix 3m is ceramic, aggregates of particulates with particle diameters of 500 nm or less are preferred. Using the aggregates of the particulates with particle diameters of 500 nm or less as the matrix 3m allows further reducing the thermal conductivity. In the case where the material to be the matrix 3m is resin, there can be used silicone resin, polyimide resin, polyamide resin, acrylic resin, epoxy resin, and the like.

As illustrated in FIG. 3, the portion of the matrix 3m with a high thermal conductivity becomes a main heat transfer path. The heat-insulating film 3 of the present invention includes the porous plate-shaped fillers 1, and the heat transfer path has many detours with respect to the direction (the thickness direction of the film) along which heat transfer is unwanted. That is, since the length of the heat transfer path becomes long, the thermal conductivity can be decreased. The binding area of the porous plate-shaped fillers 1 via the matrix 3m is wider than that of spherical fillers 31 (see FIG. 6). Accordingly, the strength of the entire heat-insulating film is increased. Thus, erosion, delamination, and the like are less likely to occur.

In the heat-insulating film 3, it is preferred that, the porosity of the entire heat-insulating film 3 be 10 to 99%, the porosity of the porous plate-shaped filler 1 be 20 to 99%, and the porosity of the matrix 3m be 0 to 70%.

The heat-insulating film 3 of the present invention is preferred to have a thickness of 1 $\mu$m to 5 mm. Setting this thickness allows providing a heat insulating effect without providing a negative effect on the characteristics of a substrate 8 coated with the heat-insulating film 3. Here, the thickness of the heat-insulating film 3 can be selected within the above-described range as necessary corresponding to the usage of the heat-insulating film 3.

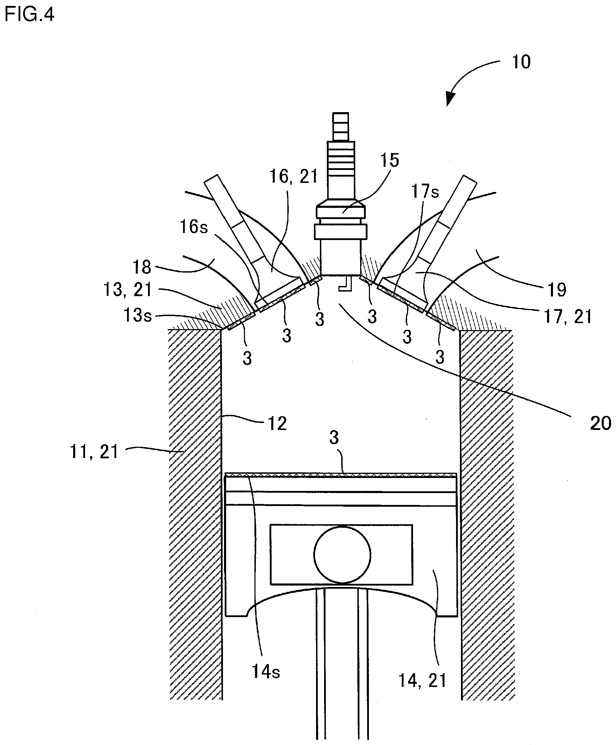

For the heat-insulating film 3 of the present invention, the heat capacity is preferred to be equal to or less than 1500 kJ/(m$^3$•K), more preferred to be equal to or less than 1000 kJ/(m$^3$•K), and most preferred to be equal to or less than 500 kJ/(m$^3$•K). When the heat capacity is low, for example, in the case where the heat-insulating film 3 is formed in an engine combustion chamber 20 (see FIG. 4), the gas temperature within the engine combustion chamber 20 is likely to be reduced after exhausting fuel. This allows reducing the problems such as abnormal combustion of an engine 10.

For the heat-insulating film 3 of the present invention, the thermal conductivity is preferred to be equal to or less than 1.5 W/(m•K). For the heat-insulating film 3, the thermal conductivity is more preferred to be equal to or less than 1 W/(m•K), and most preferred to be equal to or less than 0.5 W/(m•K). Setting a low thermal conductivity allows reducing the heat transfer.

The heat-insulating film 3 can be formed by applying the above-described coating composition over the substrate 8 and drying. After the drying, heat treatment may be performed to form the heat-insulating film 3. Here, repeating application and drying or heat treatment allows forming a thick heat-insulating film 3. Alternatively, it is possible to form the heat-insulating film 3 on a temporary substrate and then remove the temporary substrate to manufacture the heat-insulating film 3 in a thin plate shape alone separately, so as to attach or bond this heat-insulating film 3 to the substrate 8. As the substrate 8 there can be used metal, ceramic, glass, plastic, wood, cloth, paper, and the like. In particular, examples wherein the substrate 8 is metal include iron, iron alloy, stainless steel, aluminum, aluminum alloy, nickel alloy, cobalt alloy, tungsten alloy, copper alloy, and the like.

4. Heat-Insulating Film Structure

The heat-insulating film structure of the present invention will be described using FIG. 3 and FIG. 4. As illustrated in FIG. 3, the heat-insulating film structure of the present invention is a heat-insulating film structure where the above-described heat-insulating film 3 is formed on the substrate 8. Further, FIG. 4 illustrates an engine combustion chamber structure according to one embodiment of the heat-insulating film structure.

As illustrated in FIG. 4, the engine combustion chamber structure, which is one embodiment of the heat-insulating film structure according to the present invention, includes the heat-insulating films 3 formed on the surfaces of engine constituting members 21 (the substrate 8) constituting the engine combustion chamber 20. Providing the heat-insulating films 3 of the present invention allows improving the heat insulating performance of the engine combustion chamber 20.

The heat-insulating films 3 are disposed on the surfaces (the inner walls) of the engine constituting members 21 constituting the engine combustion chamber 20. Specifically, there are a top surface 14s of a piston 14, valve heads 16s and 17s of an intake valve 16 and an exhaust valve 17, a bottom surface 13s of a cylinder head 13, and the like.

The engine 10 is constituted by: a cylinder block 11 where a cylinder 12 is formed; and the cylinder head 13 mounted to cover the top surface of the cylinder block 11. Inside of the cylinder 12 of the cylinder block 11, the piston 14 is provided slidably in the vertical direction.

On the cylinder head 13, a spark plug 15 is mounted. Additionally, the intake valve 16 and the exhaust valve 17 are mounted. The intake valve 16 is constituted to open and close an intake passage 18 formed in the cylinder head 13. The exhaust valve 17 is constituted to open and close an exhaust passage 19.

As illustrated in FIG. 4, the heat-insulating film 3 is provided on the top surface 14s of the piston 14. Similarly, the heat-insulating films 3 are provided on the valve heads 16s and 17s of the intake valve 16 and the exhaust valve 17 and on the bottom surface 13s of the cylinder head 13. These surfaces are the surfaces forming the engine combustion chamber 20. Providing the heat-insulating films 3 on these surfaces allows improving the heat insulating performance.

The intake valve 16 opens to supply fuel to the engine combustion chamber 20 surrounded by the cylinder 12, the cylinder head 13, and the piston 14. The fuel is burned by ignition of the spark plug 15. This burning pushes down the piston 14. The exhaust valve 17 opens to exhaust the exhaust gas generated by the burning.

The engine 10 (see FIG. 4) needs to ensure the heat insulating property of the engine combustion chamber 20 during combustion in a cycle of Air Intake to Burning to Expansion to Air Exhaust. Accordingly, in the case where the heat-insulating film 3 is disposed in the engine combustion chamber 20, it is necessary to set the thickness to an extent that can provide the heat insulating effect. However, when the newly suctioned air during air intake draws the heat accumulated in the heat-insulating film 3 so as to increase the gas temperature, problems such as abnormal combustion might occur. Therefore, the heat-insulating film 3 is preferred to have a small heat capacity while having the thickness to an extent that can provide the heat insulating effect. Accordingly, the thickness of the heat-insulating film 3 is more preferred to be within a range of 1 $\mu$m to 5 mm, and further preferred to be within a range of 10 $\mu$m to 1 mm. Setting the thickness of the heat-insulating film 3 in this range allows reducing the occurrence of the problems such as abnormal combustion while ensuring a sufficient heat insulating effect.

FIG. 5A illustrates another embodiment of the heat-insulating film structure. The embodiment in FIG. 5A is an embodiment of the heat-insulating film structure where a buffer bonding layer 4 (a first buffer bonding layer 4a), the heat-insulating film 3, a dense surface layer 2 are formed on the substrate 8.

As illustrated in FIG. 5A, the heat-insulating film structure of the present invention is preferred to include the dense surface layer 2 that contains ceramic and/or glass and has a porosity of 5% or less on the surface of the heat-insulating film 3. In the case where the heat-insulating film 3 is formed on the inner surface of the combustion chamber or the pipe in the engine of an automobile and the like, formation of the dense surface layer 2 on the outermost surface of the heat-insulating film 3 allows preventing absorption of fuel and attachment of cinders.

Furthermore, in the case where the dense surface layer 2 is disposed on the surface of the heat-insulating film 3 and the heat-insulating film 3 is provided in the engine combustion chamber 20, the dense surface layer 2 reflects the radiation during combustion of fuel in the engine combustion chamber 20 while the dense surface layer 2 radiates heat during exhaust air. The heat-insulating film 3 allows reducing heat transfer from the dense surface layer 2 to the engine constituting member 21. Accordingly, the temperature of the inner wall (the wall surface constituting the engine combustion chamber 20) of the engine constituting member 21 is likely to increase while following the gas temperature of the engine combustion chamber 20 during combustion of fuel.

The heat-insulating film structure of the present invention is preferred to include the buffer bonding layer 4 with a thickness thinner than that of the heat-insulating film 3 between the substrate 8 and the heat-insulating film 3 (FIG. 5A) and/or between the heat-insulating film 3 and the dense surface layer 2 (see a second buffer bonding layer 4b in FIG. 5B). Formation of the heat-insulating film 3 on the substrate 8 and disposing the buffer bonding layer 4 allows reducing the delamination due to the reaction between the substrate 8 and the heat-insulating film 3 and the mismatch between the thermal expansions in case of use at high temperature or the use under the condition that a heat cycle is performed.

The following describes the dense surface layer 2 and the buffer bonding layer 4 in detail.

(Dense surface layer)

The dense surface layer 2 is a layer that is formed on the surface of the heat-insulating film 3 having a porous structure and that includes more compact ceramic than that of the heat-insulating film 3. For the dense surface layer 2, the porosity is equal to or less than 5%, is preferred to be 0.01 to 4%, and is more preferred to be 0.01 to 3%. Such dense layer allows preventing the heat transfer due to the convective flow of the gas (fuel) during combustion of fuel. With the compactness, absorption of fuel and attachment of soot or cinders are less likely to occur.

The material of the dense surface layer 2 is preferred to be similar to the material of the heat-insulating film 3, and further preferred to have the same composition and a porosity of 5% or less. The dense surface layer 2 can be formed of ceramic, and may be, for example, alumina, silica, mullite, silicon nitride, silicon oxynitride, silicon carbide, silicon oxycarbide, titania, zirconia, zinc oxide, glass, and the like.

The dense surface layer 2 is constituted of the material that reduces the radiation heat transfer from combustion flame as a heat source during combustion of fuel. The dense surface layer 2 is preferred to easily radiate its own heat when the fuel is exhausted. Accordingly, it is preferred to control the reflectivity and the radiation rate in the wavelength range expected from Wien's displacement law ($\lambda$mT = 2898 [$\mu$m•K] : here, $\lambda$m denotes the wavelength indicative of the maximum radiation intensity and T denotes the temperature). That is, the reflectivity is preferred to be large at a wavelength smaller than 2 $\mu$m and the radiation rate is preferred to be large at a wavelength larger than 2 $\mu$m.

The dense surface layer 2 with the porosity of 5% or less allows reducing the radiation heat transfer to the inner wall constituting the engine combustion chamber 20 immediately after start of combustion to the early stage of combustion. From the later stage of combustion to the exhaust process, when the temperature becomes low, heat is radiated from the dense surface layer 2 to the exhaust gas. This allows preventing the intake gas to be introduced next from heated to a high temperature.

The dense surface layer 2 is preferred to have a reflectivity larger than 0.5 at a wavelength of 2 $\mu$m. Providing this reflectivity allows reducing the heat transfer to the heat-insulating film 3.

The dense surface layer 2 is preferred to have a radiation rate larger than 0.5 at a wavelength of 2.5 $\mu$m. Providing this radiation rate facilitates cooling the heated dense surface layer 2.

While the dense surface layer 2 is preferred to be thinner, the thickness in a range of 10 nm to 100 $\mu$m is appropriate. The heat capacity of the dense surface layer 2 is preferred to be equal to or less than 3000 kJ/(m$^3$•K), and more preferred to be equal to or less than 1000 kJ/(m$^3$•K). According to the thickness in the above-described range and the low heat capacity (thin film and small volume), in the case where the heat-insulating film 3 and the dense surface layer 2 are provided in the engine combustion chamber 20, the temperature of the inner wall of the engine constituting member 21 is likely to follow the gas temperature inside of the engine combustion chamber 20. Accordingly, the temperature difference between the gas temperature and the dense surface layer 2 decreases. This allows reducing the cooling loss.

The dense surface layer 2 is preferred to have a thermal conductivity of 3 W/(m•K) or less. Setting the thermal conductivity in this range allows reducing the heat transfer to the heat-insulating film 3.

(Buffer Bonding Layer)

The buffer bonding layer 4 is a layer that is disposed between the substrate 8 (the engine constituting member 21) and the heat-insulating film 3 and/or between the heat-insulating film 3 and the dense surface layer 2 and that has a thickness thinner than that of the heat-insulating film 3. The buffer bonding layer 4 allows eliminating the mismatch of the thermal expansions or the Young's moduli between both the layers in contact with this buffer bonding layer 4 so as to reduce the delamination due to thermal stress.

The buffer bonding layer 4 is preferred to be a material that has an adhesion function or a material that can be formed as a thin film. For example, the buffer bonding layer 4 can be, for example, a layer made of an inorganic binder, an inorganic polymer, an oxide sol, liquid glass, a brazing material, a layer formed of a plated film, and the like. Alternatively, the buffer bonding layer 4 may be a layer where a material similar to the heat-insulating film 3 is combined with these materials. Alternatively, the heat-insulating film 3 formed alone in a thin plate shape can be bonded to the substrate 8 (the engine constituting member 21) and the like by the above-described material, so as to obtain the buffer bonding layer 4.

The buffer bonding layer 4 is preferred to have a thermal expansion coefficient larger than that of one of the two other layers adjacent to the buffer bonding layer 4 while having a thermal expansion coefficient smaller than that of the other layer. The buffer bonding layer 4 is preferred to have a Young's modulus smaller than that of two other layers adjacent to the buffer bonding layer 4. This configuration allows eliminating the mismatch between the layers so as to reduce the delamination due to thermal stress.

The buffer bonding layer 4 is preferred to have a large thermal resistance, specifically, preferred to have a thermal resistance of 10$^{-6}$ m$^2$K/W or more. Furthermore, the thermal resistance is preferred to be 10$^{-6}$ to 10 m$^2$K/W, more preferred to be 10$^{-5}$ to 10 m$^2$K/W, and further preferred to be 10$^{-4}$ to 10 m$^2$K/W. Formation of this buffer bonding layer 4 allows ensuring a more sufficient heat insulating effect. Additionally, formation of the buffer bonding layer 4 allows buffering the mismatch between the thermal expansions of the bonded bodies so as to improve the thermal shock resistance and thermal stress resistance.

Furthermore, the buffer bonding layer 4 is preferred to employ a material composition that reduces the mutual reaction between the respective adjacent layers. This improves the oxidation resistance and the reaction resistance, thus improving the durability of the heat-insulating film 3.

(Manufacturing Method)

The following describes a method for manufacturing the heat-insulating film structure (the engine combustion chamber structure).

In the case of the configuration that has the first buffer bonding layer 4a between the inner wall (the engine constituting member 21) constituting the engine combustion chamber 20 and the heat-insulating film 3, the material to be the first buffer bonding layer 4a is applied over (in the case of, for example, an inorganic binder, an inorganic polymer, an oxide sol, liquid glass, or a brazing material) or plated as a film on the engine constituting member 21. Then, the heat-insulating film 3 is formed on the first buffer bonding layer 4a.

The heat-insulating film 3 can be formed by applying a coating composition over the predetermined substrate 8, drying, and heat treatment. The coating composition is obtained by dispersing the porous plate-shaped fillers 1 in a material such as an inorganic binder, an inorganic polymer, an oxide sol, liquid glass, or the like. Alternatively, it is possible to separately manufacture a porous thin plate and attach this to the engine constituting member 21 with a material forming the first buffer bonding layer 4a as a binding material.

In the case of the configuration that has the second buffer bonding layer 4b between the heat-insulating film 3 and the dense surface layer 2, the second buffer bonding layer 4b is formed on the heat-insulating film 3 similarly to the first buffer bonding layer 4a and the dense surface layer 2 is formed on the second buffer bonding layer 4b.

The dense surface layer 2 can be formed on the formed heat-insulating film 3 (or on the formed second buffer bonding layer 4b) by a sputtering method, a PVD method, an EB-PVD method, a CVD method, an AD method, thermal spraying, a plasma spray method, a cold spray method, plating, heat treatment after wet coating, and the like. Alternatively, it is possible to form by separately manufacturing a compact and thin plate as the dense surface layer 2 to be bound with a base material (the first buffer bonding layer 4a or the engine constituting member 21) using the material forming the heat-insulating film 3 as the binding material. Alternatively, it is also possible to form by separately manufacturing a compact and thin plate as the dense surface layer 2 to be bound with the heat-insulating film 3 by the second buffer bonding layer 4b.

Examples

The following describes the present invention based on Examples further in detail. The present invention is not limited to these examples.

<Example 1>

Firstly, a pore former (latex particles or melamine resin particles), polyvinyl butyral resin (PVB) as a binder, DOP as a plasticizer, and xylene and 1-butanol as a solvent were added to yttria partially-stabilized zirconia powders. The mixture was mixed with a ball mill for 30 hours so as to prepare a slurry for forming a green sheet. A vacuum defoaming treatment was performed on this slurry so as to adjust the viscosity to 4000 cps. Subsequently, using the doctor blade device, the green sheet whose thickness after firing was set to 5 $\mu$m was formed and was cut into an outer shape having dimensions of 50 mm $\times$ 50 mm. This formed body was fired at 1100°C for 1 hour and crushed after the firing so as to obtain a porous and thin plate-shaped filler (porous plate-shaped filler 1).

This porous plate-shaped filler 1 included pores with pore diameters of 50 nm and had a thickness of 5 $\mu$m or less. When the aspect ratios of 20 random porous plate-shaped fillers were measured, the values of the aspect ratios were 3 to 5. Additionally, the thermal conductivity was 0.3 W/(m•K) and the porosity was 60%.

Subsequently, a coating composition containing a silica sol, liquid glass, the porous plate-shaped fillers 1, and water was prepared. The coating composition was applied over an aluminum alloy as the substrate 8, dried, and then processed by heat treatment at 500°C, so as to be the heat-insulating film 3. Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.8 W/(m•K) and the heat capacity was 1460 kJ/(m$^3$•K).

<Example 2>

The porous plate-shaped fillers 1 were manufactured similarly to Example 1.

Subsequently, a coating composition containing perhydropolysilazane, an amine catalyst, the porous plate-shaped fillers 1, and xylene was prepared. The coating composition was applied over an aluminum alloy as the substrate 8, dried, and then processed by heat treatment at 250°C, so as to be the heat-insulating film 3.

Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.2 W/(m•K) and the heat capacity was 1150 kJ/(m$^3$•K).

<Example 3>

A porous and thin plate-shaped tape was obtained with the procedure similar to that in Example 1 but without coarse crushing. On the surface of this tape, a zinc oxide film was formed by a CVD method. Furthermore, this tape was coarsely crushed so as to obtain the porous plate-shaped fillers 1 having thermal resistance films (coating layers 7) on their surfaces.

Subsequently, a coating composition containing perhydropolysilazane, an amine catalyst, the above-described porous plate-shaped fillers 1, and xylene was prepared. The coating composition was applied over an aluminum alloy as the substrate 8, dried, and then processed by heat treatment at 250°C, so as to be the heat-insulating film 3.

Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.15 W/(m•K) and the heat capacity was 1180 kJ/(m$^3$•K).

<Example 4>

Similarly to Example 1, a pore former (latex particles or melamine resin particles), polyvinyl butyral resin (PVB) as a binder, DOP as a plasticizer, and xylene and 1-butanol as a solvent were added to yttria partially- stabilized zirconia powders. The mixture was mixed with a ball mill for 30 hours so as to prepare a slurry for a green sheet. A vacuum defoaming treatment was performed on this slurry so as to adjust the viscosity to 4000 cps . Subsequently, using the doctor blade device, the green sheet whose thickness after firing was set to 5 $\mu$m was formed and was cut into an outer shape having dimensions of 50 mm $\times$ 50 mm. This formed body was fired at 1100°C for 1 hour. The fired body thus obtained was coarsely crushed so as to obtain the porous plate-shaped fillers 1.

The porous plate-shaped filler 1 included pores of 50 nm and had a thickness of 5 $\mu$m or less. When the aspect ratios of 20 random fillers were measured, the values of the aspect ratios were 5 to 10. Additionally, the thermal conductivity was 0.3 W/(m•K).

Subsequently, a coating composition containing perhydropolysilazane, an amine catalyst, the porous plate-shaped fillers 1, and xylene was prepared. The coating composition was applied over an aluminum alloy as the substrate 8, dried, and then processed by heat treatment at 250°C, so as to be the heat-insulating film 3.

At this time, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.15 W/(m•K) and the heat capacity was 1160 kJ/(m$^3$•K).

<Example 5>

The porous plate-shaped fillers 1 were manufactured similarly to Example 1.

Subsequently, a coating composition containing a boehmite fiber sol, the porous plate-shaped filler 1, and water was prepared. The coating composition was applied over an aluminum alloy as the substrate 8, dried, and then processed by heat treatment at 500°C, so as to be the heat-insulating film 3.

Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.25 W/(m•K) and the heat capacity was 1140 kJ/(m$^3$•K) .

<Example 6>

The porous plate-shaped fillers 1 were manufactured similarly to Example 1.

Subsequently, a coating composition containing polysiloxane, the porous plate-shaped fillers 1, isopropyl alcohol was prepared. The coating composition was applied over an aluminum alloy as the substrate 8, dried, and then processed by heat treatment at 500°C, so as to be the heat-insulating film 3.

Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.5 W/(m•K) and the heat capacity was 1490 kJ/(m$^3$•K).

<Example 7>

The porous plate-shaped fillers 1 were manufactured similarly to Example 1. However, instead of the yttria partially-stabilized zirconia powders, yttria fully-stabilized zirconia powders were used.

Subsequently, a coating composition containing polysiloxane, the porous plate-shaped fillers 1, and isopropyl alcohol was prepared. The coating composition was applied over an aluminum alloy as the substrate 8, dried, and then processed by heat treatment at 200°C, so as to be the heat-insulating film 3.

Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.4 W/(m•K) and the heat capacity was 1230 kJ/(m$^3$•K).

<Example 8>

The porous plate-shaped fillers 1 were manufactured similarly to Example 7.

Subsequently, a coating composition containing polysilsesquioxane, the porous plate-shaped fillers 1, and isopropyl alcohol was prepared. The coating composition was applied over an aluminum alloy as the substrate 8, dried, and then processed by heat treatment at 200°C, so as to be the heat-insulating film 3.

Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.3 W/(m•K) and the heat capacity was 1180 kJ/(m$^3$•K).

<Example 9>

The porous plate-shaped fillers 1 were manufactured similarly to Example 7.

Subsequently, a coating composition containing an acryl-silica hybrid material, the porous plate-shaped fillers 1, and isopropyl alcohol was prepared. The coating composition was applied over an aluminum alloy as the substrate 8, dried, and then processed by heat treatment at 200°C, so as to be the heat-insulating film 3.

Here, in the heat-insulating film 3, ten or more of the porous plate-shaped fillers 1 were stacked in the thickness direction and the thickness was approximately 100 $\mu$m. Additionally, for the heat-insulating film 3, the thermal conductivity was 0.3 W/(m•K) and the heat capacity was 1100 kJ/(m$^3$•K).

<Example 10>

The porous plate-shaped filler 1 were manufactured similarly to Example 1. However, instead of the yttria partially-stabilized zirconia powders, lanthanum zirconate powders were used.

Subsequently, a coating composition containing polysiloxane, the porous plate-shaped fillers 1, and isopropyl alcohol was prepared. The coating composition was applied over an aluminum alloy as the substrate 8, dried, and then processed by heat treatment at 200°C, so as to be the heat-insulating film 3.

Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.25 W/(m•K) and the heat capacity was 1050 kJ/(m$^3$•K).

<Example 11>

The porous plate-shaped fillers 1 were manufactured similarly to Example 1. However, instead of the yttria partially-stabilized zirconia powders, yttrium silicate powders were used.

Subsequently, a coating composition containing polysiloxane, the porous plate-shaped fillers 1, and isopropyl alcohol was prepared. The coating composition was applied over an aluminum alloy as the substrate 8, dried, and then processed by heat treatment at 200°C, so as to be the heat-insulating film 3.

Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.3 W/(m•K) and the heat capacity was 1120 kJ/(m$^3$•K).

<Example 12>

The porous plate-shaped fillers 1 were manufactured similarly to Example 1. However, instead of the yttria partially-stabilized zirconia powders, strontium niobate powders were used.

Subsequently, a coating composition containing polysiloxane, the porous plate-shaped fillers 1, and isopropyl alcohol was prepared. The coating composition was applied over an aluminum alloy as the substrate 8, dried, and then processed by heat treatment at 200°C, so as to be the heat-insulating film 3.

Here, in the heat-insulating film 3, ten or more of the porous plate-shaped fillers 1 were stacked in the thickness direction and the thickness of the heat-insulating film 3 was approximately 100 $\mu$m. Additionally, for the heat-insulating film 3, the thermal conductivity was 0.25 W/(m•K) and the heat capacity was 1240 kJ/(m$^3$•K).

<Comparative Example 1>

A pore former (latex particles or melamine resin particles), polyvinyl alcohol (PVA) as a binder, a dispersing agent, and water were added to yttria partially-stabilized zirconia powders to be mixed together by a ball mill for 30 hours, so as to prepare a slurry. This slurry was dried by spray drying so as to obtain granules in spherical shapes. These granules were fired at 1100°C for 1 hour. The obtained fired powder was cracked and fine powders were removed so as to obtain spherical fillers 31.

This spherical filler 31 included pores of 50 nm. The spherical filler 31 had an average particle diameter of 20 $\mu$m, the minimum particle diameter of 5 $\mu$m, and a porosity of 60%. When the aspect ratios of 20 random fillers were measured, the values of the aspect ratios were 1 to 1.5. The thermal conductivity of the fired body obtained by forming the granules in plate shapes and firing the granules under the same condition was 0.3 W/(m•K).

A coating composition containing a silica sol, liquid glass, the spherical fillers 31, and water was prepared. The coating composition was applied over an aluminum alloy as the substrate 8, dried, and then processed by heat treatment at 500°C, so as to be the heat-insulating film 3. Here, the heat-insulating film 3 randomly included the spherical fillers 31 and had a thickness of approximately 100 $\mu$m. FIG. 6 illustrates a heat-insulating film structure of Comparative Example 1. For the heat-insulating film 3, the thermal conductivity was 1.7 W/(m•K) and the heat capacity was 1550 kJ/(m$^3$•K).

The above-described results were shown in Tables 1 and 2.

[Table 1]

| | | Filler | | | | | | | |
|---|---|---|---|---|---|---|---|---|---|
| | Material | Aspect Ratio | Minimum Length | Porosity | Particle Diameter | Thermal Resistance Film | Thermal Conductivity | Heat Capacity |
| Example 1 | Yttria Partially-Stabilized Zirconia | 3 to 5 | 5 $\mu$m | 60% | 200 nm | None | 0.30 W/(m•K) | 1200 kJ/(m$^3$K) |
| Example 2 | Yttria Partially-Stabilized Zirconia | 3 to 5 | 5 $\mu$m | 60% | 200 nm | None | 0.30 W/(m•K) | 1200 kJ/(m$^3$K) |
| Example 3 | Yttria Partially-Stabilized Zirconia | 3 to 5 | 5 $\mu$m | 60% | 200 nm | Zinc Oxide | 0.30 W/(m•K) | 1200 kJ/(m$^3$K) |
| Example 4 | Yttria Partially-Stabilized Zirconia | 5 to 10 | 5 $\mu$m | 60% | 200 nm | None | 0.30 W/(m•K) | 1200 kJ/(m$^3$K) |
| Example 5 | Yttria Partially-Stabilized Zirconia | 3 to 5 | 5 $\mu$m | 60% | 200 nm | None | 0.30 W/(m•K) | 1200 kJ/(m$^3$K) |
| Example 6 | Yttria Partially-Stabilized Zirconia | 3 to 5 | 5 $\mu$m | 60% | 200 nm | None | 0.30 W/(m•K) | 1200 kJ/(m$^3$K) |
| Example 7 | Yttria Fully-Stabilized Zirconia | 5 to 7 | 8 $\mu$m | 65% | 100 nm | None | 0.27 W/(m•K) | 1000 kJ/(m$^3$K) |
| Example 8 | Yttria Fully-Stabilized Zirconia | 5 to 7 | 8 $\mu$m | 65% | 100 nm | None | 0.27 W/(m•K) | 1000 kJ/(m$^3$K) |
| Example 9 | Yttria Fully-Stabilized Zirconia | 5 to 7 | 8 $\mu$m | 65% | 100 nm | None | 0.27 W/(m•K) | 1000 kJ/(m$^3$K) |
| Example 10 | Lanthanum Zirconate | 5 to 7 | 10 $\mu$m | 67% | 200 nm | None | 0.23 W/(m•K) | 900 kJ/(m$^3$K) |
| Example 11 | Yttrium Silicate | 5 to 7 | 10 $\mu$m | 63% | 500 nm | None | 0.25 W/(m•K) | 1000 kJ/(m$^3$K) |
| Example 12 | Strontium Niobate | 5 to 7 | 10 $\mu$m | 61% | 500 nm | None | 0.23 W/(m•K) | 1100 kJ/(m$^3$K) |
| Comparative Example 1 | Yttria Partially-Stabilized Zirconia | 1 to 1.5 | 5 $\mu$m | 60% | 200 nm | None | 0.30 W/(m•K) | 1200 kJ/(m$^3$K) |

[Table 2]

| | Heat-Insulating Film | | | |
|---|---|---|---|---|
| | Material Of Matrix | Thickness | Thermal Conductivity | Heat Capacity |
| Example 1 | Silica Sol | 100 $\mu$m | 0.80 W/(m·K) | 1460 kJ/(m$^3$·K) |
| Example 2 | Perhydropolysilazane | 100 $\mu$m | 0.24 W/(m·K) | 1150 kJ/(m$^3$·K) |
| Example 3 | Perhydropolysilazane | 100 $\mu$m | 0.15 W/(m·K) | 1180 kJ/(m$^3$·K) |
| Example 4 | Perhydropolysilazane | 100 $\mu$m | 0.15 W/(m·K) | 1160 kJ/(m$^3$·K) |
| Example 5 | Boehmite Fiber Sol | 100 $\mu$m | 0.25 W/(m·K) | 1140 kJ/(m$^3$·K) |
| Example 6 | Polysiloxane | 100 $\mu$m | 0.5 W/(m·K) | 1490 kJ/(m$^3$·K) |
| Example 7 | Polysiloxane | 100 $\mu$m | 0.4 W/(m·K) | 1230 kJ/(m$^3$·K) |
| Example 8 | Polysilsesquioxane | 100 $\mu$m | 0.3 W/(m·K) | 1180 kJ/(m$^3$·K) |
| Example 9 | Acryl-Silica Hybrid Material | 100 $\mu$m | 0.3 W/(m·K) | 1100 kJ/(m$^3$·K) |
| Example 10 | Polysiloxane | 100 $\mu$m | 0.25 W/(m·K) | 1050 kJ/(m$^3$·K) |
| Example 11 | Polysiloxane | 100 $\mu$m | 0.3 W/(m·K) | 1120 kJ/(m$^3$·K) |
| Example 12 | Polysiloxane | 100 $\mu$m | 0.25 W/(m·K) | 1240 kJ/(m$^3$·K) |
| Comparative Example 1 | Silica Sol | 100 $\mu$m | 1.7 W/(m·K) | 1550 kJ/(m$^3$·K) |

As described above, Comparative Example 1 employed the spherical fillers 31 with the aspect ratios of 1 to 1.5. The thermal conductivity and the heat capacity of the heat-insulating film 3 were increased compared with Examples. That is, the heat-insulating film 3 including the porous plate-shaped fillers 1 allowed reducing the thermal conductivity and the heat capacity compared with the heat-insulating film 3 including the spherical fillers 31.

In the case of the spherical fillers 31 (in particular, in the case of spherical fillers with the same particle diameters), even when the volume ratio of the fillers with low thermal conductions was intended to be increased, there are many gaps by filled particles . Then, the matrix 3m is introduced into these portions or these portions remain as voids. In the case where the matrix 3m is introduced, the ratio of the matrix 3m (high thermal conducting component) in the heat-insulating film 3 is increased. Accordingly, the thermal conductivity of the heat-insulating film 3 trends to be high. In the case where the portions remain as voids, the thermal conductivity of the heat-insulating film 3 becomes low since the void does not become a heat transfer path. However, the matrix 3m binding between the fillers is in a small amount, and sufficient strength cannot be obtained. On the other hand, in the case of the plate-shaped fillers, the fillers are oriented and filled to be stacked. This allows increasing the volume ratio of the fillers without generating unnecessary voids, and ensures wide attached surfaces between the fillers via the matrix 3m even when the matrix 3m introduced between the fillers is in a small amount. Thus, a sufficient strength can be obtained.

Industrial Applicability

The heat-insulating film and the heat-insulating film structure according to the present invention are applicable to an engine of an automobile and the like, a pipe, a wall of an architectural structure, and the like.

Description of Reference Numerals

1: porous plate-shaped filler, 2: dense surface layer, 3: heat-insulating film, 3m: matrix, 4: buffer bonding layer, 4a: first buffer bonding layer, 4b: second buffer bonding layer, 7: coating layer, 8: substrate, 10: engine, 11: cylinder block, 12: cylinder, 13: cylinder head, 13s: bottom surface (of cylinder head), 14: piston, 14s: top surface (of piston), 15: spark plug, 16: intake valve, 16s : valve head, 17: exhaust valve, 17s: valve head, 18: intake passage, 19: exhaust passage, 20: engine combustion chamber, 21: engine constituting member, 31: spherical filler

**Claims**

1. A porous plate-shaped filler, wherein

   the porous plate-shaped filler is a plate with an aspect ratio of 3 or more, said aspect ratio being defined by the maximum length/the minimum length of the porous plate-shaped filler as illustrated in Fig. 1 for one embodiment of the porous plate-shaped filler,
   the porous plate-shaped filler has a minimum length of 0.1 to 50 $\mu$m, preferably 0.1 to 10 $\mu$m, and
   the porous plate-shaped filler has a porosity of 20 to 99%, said porosity being obtained by the following formula:

$$\text{Porosity (\%)} = (1 - (\text{Apparent Particle Density} \div \text{True Density})) \times 100$$

   wherein the apparent particle density is measured with a liquid immersion method using mercury, and the true density is measured with a pycnometer method after the porous plate-shaped filler is sufficiently pulverized.

2. The porous plate-shaped filler according to claim 1 having a thermal conductivity of 1 W/(m•K) or less, thermal conductivity measured as described in the description.

3. The porous plate-shaped filler according to claim 1 or 2 having a heat capacity of 10 to 3000 kJ/(m$^3$•K).

4. The porous plate-shaped filler according to any one of claims 1 to 3, comprising nano-order pores, nano-order particles, or nano-order crystal grains.

5. The porous plate-shaped filler according to any one of claims 1 to 4, comprising pores with a pore diameter of 10 to 500 nm.

6. The porous plate-shaped filler according to any one of claims 1 to 5, comprising a metal oxide.

7. The porous plate-shaped filler according to claim 6, wherein
   the metal oxide is an oxide of one element or a composite oxide of two or more elements, the element being selected from the group consisting of Zr, Y, Al, Si, Ti, Nb, Sr, and La.

8. The porous plate-shaped filler according to any one of claims 1 to 7, comprising particles with a particle diameter of 1 nm to 10 $\mu$m, wherein the particle diameter is measured by measuring the size of one particle among the particles constituting the porous plate-shaped filler from an image by electron microscope observation.

9. The porous plate-shaped filler according to any one of claims 1 to 8, comprising a coating layer with a thickness of 1 nm to 1 $\mu$m on at least a part of the substrate.

10. A coating composition, comprising:

    the porous plate-shaped filler according to any one of claims 1 to 9; and
    one or more of members selected from the group consisting of an inorganic binder, an inorganic polymer, an organic-inorganic hybrid material, an oxide sol, and a liquid glass.

11. A heat-insulating film, comprising:

    the porous plate-shaped fillers according to any one of claims 1 to 9; and
    a matrix for binding the porous plate-shaped fillers, wherein
    the porous plate-shaped fillers are dispersedly arranged in the matrix, and
    the porous plate-shaped fillers are arranged in a layered state.

12. The heat-insulating film according to claim 11, comprising at least one of ceramic, glass, and resin as the matrix.

13. A heat-insulating film structure, comprising
    the heat-insulating film according to claim 11 or 12, the heat-insulating film being formed on a substrate.

**14.** The heat-insulating film structure according to claim 13, comprising
a dense surface layer on the surface of the heat-insulating film, wherein the dense surface layer contains ceramic and/or glass and has a porosity of 5% or less.

**15.** The heat-insulating film structure according to claim 14, comprising
a buffer bonding layer disposed between the substrate and the heat-insulating film and/or between the heat-insulating film and the dense surface layer, wherein the buffer bonding layer has a thickness thinner than a thickness of the heat-insulating film.

**Patentansprüche**

**1.** Poröser plattenförmiger Füllstoff, wobei

der poröse plattenförmige Füllstoff eine Platte mit einem Seitenverhältnis von 3 oder mehr ist, wobei das Seitenverhältnis, wie in Fig. 1 für ein Ausführungsbeispiel des porösen plattenförmigen Füllstoffs dargestellt ist, durch die maximale Länge/die minimale Länge des porösen plattenförmigen Füllstoffs definiert wird,
der poröse plattenförmige Füllstoff eine minimale Länge von 0,1 bis 50 $\mu$m, vorzugsweise 0,1 bis 10 $\mu$m hat und
der poröse plattenförmige Füllstoff eine Porosität von 20 bis 99% hat, wobei die Porosität durch die folgende Formel ermittelt wird:

$$\text{Porosität (\%)} = (1 - (\text{scheinbare Partikeldichte} \div \text{wahre Dichte})) \times 100$$

wobei die scheinbare Partikeldichte mit einem Flüssigkeitseintauchverfahren unter Verwendung von Quecksilber gemessen wird und die wahre Dichte mit einem Pyknometer-Verfahren gemessen wird, nachdem der poröse plattenförmige Füllstoff ausreichend pulverisiert wurde.

**2.** Poröser plattenförmiger Füllstoff nach Anspruch 1, der eine Wärmeleitfähigkeit von 1 W/(m·K) oder weniger hat, wobei die Wärmeleitfähigkeit wie in der Beschreibung beschrieben gemessen wird.

**3.** Poröser plattenförmiger Füllstoff nach Anspruch 1 oder 2, der eine Wärmekapazität von 10 bis 3000 kJ/(m$^3$·K) hat.

**4.** Poröser plattenförmiger Füllstoff nach einem der Ansprüche 1 bis 3, der nanogroße Poren, nanogroße Partikel oder nanogroße Kristallkörner umfasst.

**5.** Poröser plattenförmiger Füllstoff nach einem der Ansprüche 1 bis 4, der Poren mit einem Porendurchmesser von 10 bis 500 nm umfasst.

**6.** Poröser plattenförmiger Füllstoff nach einem der Ansprüche 1 bis 5, der ein Metalloxid umfasst.

**7.** Poröser plattenförmiger Füllstoff nach Anspruch 6, wobei
das Metalloxid ein Oxid von einem Element oder ein Mischoxid von zwei oder mehr Elementen ist, wobei das Element aus der aus Zr, Y, Al, Si, Ti, Nb, Sr und La bestehenden Gruppe ausgewählt ist.

**8.** Poröser plattenförmiger Füllstoff nach einem der Ansprüche 1 bis 7, der Partikel mit einem Partikeldurchmesser von 1 nm bis 10 $\mu$m umfasst, wobei der Partikeldurchmesser gemessen wird, indem durch Elektronenmikroskopuntersuchung anhand eines Bilds unter den Partikeln, die den porösen plattenförmigen Füllstoff bilden, die Größe von einem Partikel gemessen wird.

**9.** Poröser plattenförmiger Füllstoff nach einem der Ansprüche 1 bis 8, der auf zumindest einem Teil des Substrats eine Beschichtungsschicht mit einer Dicke von 1 nm bis 1 $\mu$m umfasst.

**10.** Beschichtungszusammensetzung, mit:

dem porösen plattenförmigen Füllstoff gemäß einem der Ansprüche 1 bis 9; und
einem oder mehr Gruppenbestandteilen, die aus der aus einem anorganischen Bindemittel, einem anorganischen Polymer, einem organisch-anorganischen Hybridmaterial, einem Oxid-Sol und einem Flüssigglas bestehenden Gruppe ausgewählt sind.

**11.** Wärmeisolierender Film, mit:

den porösen plattenförmigen Füllstoffen gemäß einem der Ansprüche 1 bis 9; und
einer Matrix zum Binden der porösen plattenförmigen Füllstoffe, wobei
die porösen plattenförmigen Füllstoffe in der Matrix verteilt angeordnet sind und
die porösen plattenförmigen Füllstoffe in einem geschichteten Zustand angeordnet sind.

**12.** Wärmeisolierender Film nach Anspruch 11, der mindestens eines von Keramik, Glas und Harz als die Matrix umfasst.

**13.** Wärmeisolierender Filmaufbau, mit
dem wärmeisolierenden Film gemäß Anspruch 11 oder 12, wobei der wärmeisolierende Film auf einem Substrat ausgebildet ist.

**14.** Wärmeisolierender Filmaufbau nach Anspruch 13, mit
einer dichten Oberflächenschicht auf der Oberfläche des wärmeisolierenden Films, wobei die dichte Oberflächenschicht Keramik und/oder Glas enthält und eine Porosität von 5% oder weniger hat.

**15.** Wärmeisolierender Filmaufbau nach Anspruch 14, mit
einer Pufferbindeschicht, die zwischen dem Substrat und dem wärmeisolierenden Film und/oder zwischen dem wärmeisolierenden Film und der dichten Oberflächenschicht angeordnet ist, wobei die Pufferbindeschicht eine Dicke dünner als eine Dicke des wärmeisolierenden Films hat.

## Revendications

**1.** Charge poreuse en forme de plaque,

laquelle charge poreuse en forme de plaque est une plaque ayant un rapport d'aspect de 3 ou plus, ledit rapport d'aspect étant défini par le rapport de la longueur maximale à la longueur minimale de la charge poreuse en forme de plaque, comme l'illustre la Figure 1 pour un mode de réalisation de la charge poreuse en forme de plaque,
laquelle charge poreuse en forme de plaque a une longueur minimale de 0,1 à 50 $\mu$m, de préférence de 0,1 à 10 $\mu$m, et
laquelle charge poreuse en forme de plaque a une porosité de 20 à 99 %, ladite porosité étant obtenue par la formule suivante :

```
porosité (%) = (1 - (masse volumique apparente des
particules ÷ masse volumique absolue)) × 100
```

dans laquelle la masse volumique apparente des particules est mesurée au moyen d'un procédé d'immersion dans un liquide utilisant du mercure, et la masse volumique absolue est mesurée au moyen d'un procédé utilisant un pycnomètre après que la charge poreuse en forme de plaque a été suffisamment pulvérisée.

**2.** Charge poreuse en forme de plaque selon la revendication 1, ayant une conductivité thermique de 1 W/(m•K) ou moins, la conductivité thermique étant mesurée comme décrit dans la description.

**3.** Charge poreuse en forme de plaque selon la revendication 1 ou 2, ayant une capacité thermique de 10 à 3 000 kJ/(m$^3$•K) .

**4.** Charge poreuse en forme de plaque selon l'une quelconque des revendications 1 à 3, comprenant des pores de taille nanométrique, des particules de taille nanométrique, ou des grains cristallins de taille nanométrique.

**5.** Charge poreuse en forme de plaque selon l'une quelconque des revendications 1 à 4, comprenant des pores ayant un diamètre de pore de 10 à 500 nm.

**6.** Charge poreuse en forme de plaque selon l'une quelconque des revendications 1 à 5, comprenant un oxyde métallique.

**7.** Charge poreuse en forme de plaque selon la revendication 6, dans laquelle l'oxyde métallique est un oxyde d'un élément ou un oxyde composite de deux éléments ou plus, l'élément étant choisi dans l'ensemble constitué par Zr, Y, Al, Si, Ti, Nb, Sr et La.

**8.** Charge poreuse en forme de plaque selon l'une quelconque des revendications 1 à 7, comprenant des particules ayant un diamètre de particule de 1 nm à 10 $\mu$m, dans laquelle le diamètre de particule est mesuré par mesure de la taille d'une particule parmi les particules constituant la charge poreuse en forme de plaque à partir d'une image par observation au microscope électronique.

**9.** Charge poreuse en forme de plaque selon l'une quelconque des revendications 1 à 8, comprenant une couche de revêtement ayant une épaisseur de 1 nm à 1 $\mu$m sur au moins une partie du substrat.

**10.** Composition de revêtement comprenant :

la charge poreuse en forme de plaque selon l'une quelconque des revendications 1 à 9 ; et
un ou plusieurs membres choisis dans l'ensemble constitué par un liant inorganique, un polymère inorganique, un matériau hybride organique-inorganique, un sol d'oxyde, et un verre liquide.

**11.** Film isolant thermique comprenant :

les charges poreuses en forme de plaque selon l'une quelconque des revendications 1 à 9 ; et
une matrice pour lier les charges poreuses en forme de plaque,
dans lequel
les charges poreuses en forme de plaque sont agencées en étant dispersées dans la matrice, et
les charges poreuses en forme de plaque sont agencées dans un état stratifié.

**12.** Film isolant thermique selon la revendication 11, comprenant, en tant que matrice, au moins l'un parmi une céramique, un verre et une résine.

**13.** Structure de film isolant thermique, comprenant le film isolant thermique selon la revendication 11 ou 12, le film isolant thermique étant formé sur un substrat.

**14.** Structure de film isolant thermique selon la revendication 13, comprenant une couche de surface dense sur la surface du film isolant thermique, dans laquelle la couche de surface dense contient une céramique et/ou un verre et a une porosité de 5 % ou moins.

**15.** Structure de film isolant thermique selon la revendication 14, comprenant une couche liante formant tampon disposée entre le substrat et le film isolant thermique et/ou entre le film isolant thermique et la couche de surface dense, dans laquelle la couche liante formant tampon a une épaisseur inférieure à l'épaisseur du film isolant thermique.

FIG.1

MAXIMUM
LENGTH

MINIMUM
LENGTH

1

FIG.2

1

7

FIG.3

1

3m

Z DIRECTION

3

X DIRECTION

8,21

FIG.4

FIG.5A

FIG.5B

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008200922 A
- JP 2011052630 A
- US 2004219010 A1